# EUROPÄISCHE PATENTANMELDUNG

(11) **EP 4 328 772 A1**
(43) Veröffentlichungstag der Anmeldung: **28.02.2024**
(21) Anmeldenummer: 22192462.4
(22) Anmeldetag: 26.08.2022
(51) Int. Cl.: G06F 21/53, G06F 9/455, G06F 21/64, H04L 9/32, H04L 9/40

(54) **KASKADIERT SIGNIERBARES ARTEFAKT EINER CONTAINER-INSTANZ**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein Artefakt für eine Instanziierung und/oder Konfiguration einer Container-Instanz für eine Containerlaufzeitumgebung,
aufweisend:
- mindestens einen ersten Parameter, wobei der mindestens eine erste Parameter eine erste kryptographische Signatur aufweist,
- mindestens einen zweiten Parameter, und
- eine explizite Spezifikation des mindestens einen zweiten Parameters hinsichtlich einer Signierbarkeit durch eine zweite kryptographische Signatur.

Außerdem betrifft die Erfindung eine Container-Instanz, eine Containerlaufzeitumgebung und ein Verfahren zur Erstellung eines Artefakts für eine Instanziierung und/oder Konfiguration einer Container-Instanz für eine Containerlaufzeitumgebung.

## Beschreibung

### HINTERGRUND DER ERFINDUNG

### Gebiet der Erfindung

Die vorliegende Erfindung betrifft ein Artefakt für eine Instanziierung und/oder Konfiguration einer Container-Instanz für eine Containerlaufzeitumgebung. Die Erfindung betrifft außerdem eine zugehörige Container-Instanz, eine Container-laufzeitumgebung und ein Verfahren zur Erstellung eines Artefakts für eine Instanziierung und/oder Konfiguration einer Container-Instanz für eine Containerlaufzeitumgebung.

### Beschreibung des Stands der Technik

Um Container-Images und deren Container-Depolyment-Konfiguration mit einem Integritäts- und Authentizitätsschutz zu versehen, können sowohl Container-Images als auch die Container-Deployment-Konfiguration, generell sind beide auch als als Container-Artefakt bezeichenbar, signiert werden.

Bei den meisten Container-Signaturverfahren entsteht das Problem, dass Container-Images, sofern diese in eine andere Registry kopiert werden, neu signiert werden müssen, da der Uniform Resource Locator (URL) der Registry mit in die Berechnung der Signatur mit hinzugezogen wird. Möchte man bei einer containerisierten Umgebung containerisierte Komponenten in unterschiedlichen Registries (beim Kunden und deren Kunden) bereitstellen, sind solche Signaturverfahren nur begrenzt einsetzbar, da in jeder Registry ein erneuter Signaturvorgang erforderlich ist und die Validierung der ursprünglichen, in der ersten Registry (beim Hersteller oder Ersteller) bereitgestellten Informationen verloren geht.

Durch erneute Signatur kann Derjenige, der eine Komponente erhält und weiterverarbeiten möchte, (insbesondere auf einer Laufzeitumgebung ausführen oder in weitere Verarbeitungsprozesse wie Imageerstellung einbinden möchte)jedoch nicht überprüfen, ob die in einer nachgelagerten Registry bereitgestellten Container-Image authentisch sind oder vom Betreiber der nachgelagerten Registries modifiziert wurden.

Gleiches gilt für den Betreiber einer containerisierten industriellen IoT Laufzeitumgebung (welche z.B. auf einem Edge Device bereitgestellt wird), welcher erkennen möchte, dass die auf dem Gerät und in einer Containerlaufzeitumgebung befindliche aus einer oder mehreren Container-Instanzen bestehenden App tatsächlich vom ursprünglichen Ersteller kommt.

Für Container-Images existieren verschiedene Signaturverfahren, wie Notary Version 1, Notary Version 2, Cosign oder Redhat Container Signing, die die Signatur von Artefakten wie Container-Images und Deployment-Konfigurationen unterstützen und auch im Umfeld von Containern eingesetzt werden. Alles verwenden das Grundprinzip, dass ein einmal signiertes Artefakt unveränderlich ist und nach erfolgter Änderung auch erneut signiert werden muss.

Notary Version 1, Cosign und Redhat Container Signing basieren zusätzlich darauf, dass der URL der Registry, also die ursprüngliche Lokation, eines Container-Images mit in die Berechnung der Signatur mit einbezogen wird.

Zudem sind die Signaturen bei Notary Version 1, Cosign und Redhat Container Signing nicht Bestandteil des signierten Artefakts, sondern extern ausgelagert und beispielsweise in einer Registry abgelegt. Erfolgt eine Relokation des signierten Artefakts in eine andere Registry, muss ein erneuter Signaturvorgang erfolgen, sodass der Ursprungskontext des Build-Artefaktes, insbesondere des Container-Images oder der Deployment-Konfiguration, verloren geht.

Bei Notary v2 ist die Signatur Bestandteil des Images und wird also so genanntes ORAS-Manifest in das Container-Image mit hinzugefügt. Gemäß Notary v2 Spezifikation ist es auch explizit möglich, dass definiert werden kann, dass bestimmte Bereiche eines Artefakts von der Signatur ausgenommen werden sollen. Eine Relokation des Images ist somit möglich, jedoch bieten die Tools wie notation zur Signaturerzeugung und Validierung dem Ersteller der Signatur keine Möglichkeit der Steuerung, welche Parameter eines Build-Artefakts zur Signaturberechnung mit einbezogen werden sollen und welche nicht, sodass bei der Erzeugung einer Signatur nicht der Umfang der Integritäts- und Authenzitätssicherung definiert werden kann oder mehrere Signaturen gleichzeitig angebracht werden können, die sich auf unterschiedliche Bereiche des Artefakts (Deployment-Konfiguration oder Container-Image) beziehen.

Die Aufgabe der Erfindung besteht darin, einen hinsichtlich Integrität und Authentizität verbesserten Artefakt für eine Instanziierung und/oder Konfiguration einer Container-Instanz für eine Containerlaufzeitumgebung bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft einen Artefakt für eine Instanziierung und/oder Konfiguration einer Container-Instanz für eine Containerlaufzeitumgebung,
aufweisend:
- mindestens einen ersten Parameter, wobei der mindestens eine erste Parameter eine erste kryptographische Signatur aufweist,
- mindestens einen zweiten Parameter, und
- eine explizite Spezifikation des mindestens einen zweiten Parameters hinsichtlich einer Signierbarkeit durch eine zweite kryptographische Signatur.

Die Signierbarkeit durch die zweite kryptographische Signatur des mindestens einen zweiten Parameters bedeutet, dass der mindestens eine zweite Parameter durch mindestens eine zweite kryptographische Signatur signierbar ist. Dies ist expliziert zu dem Artefakt spezifiziert.

Die explizite Spezifikation des mindestens einen zweiten Parameters kann weitere Details zu dem mindestens einem zweiten Parameter (Name, Ort, Referenz) aufweisen. Explizit ist anspruchsgemäß aber auch angegeben, dass der mindestens eine zweite Parameter signiert werden kann.

Die erste kryptographische Signatur ist auch als vorrangehende Signatur bezeichenbar. Die zweite kryptographische Signatur ist auch als nachfolgende Signatur bezeichenbar.

Ein grundlegender Aspekt der Erfindung besteht somit darin, dass ein zu erstellendes Artefakt, insbesondere eine Deployment-Konfiguration oder ein Container-Image:
- mehrfach von unterschiedlichen Entitäten signiert werden kann und
- der Ersteller der vorherigen Signatur innerhalb dieser steuern kann, welche Bereiche des Artefaktes verändert werden dürfen, da diese Parameter nicht Grundlage der Signatur sind.

Des Weiteren möchte der Ersteller einer containerisierten Anwendung möglicherweise ebenfalls kontrollieren können, in welchen nachgelagerten Registries eine App bereitgestellt werden darf, da ausschließlich Registries, welche bestimmte Kriterien erfüllen, als vertrauenswürdig angesehen werden. Gleichzeitig soll in diesen vertrauenswürdigen nachgelagerten Registries erlaubt werden, dass, innerhalb eines Images bestimmte Informationen (wie insbesondere definierte Image-Tags) hinzugefügt oder bearbeitet werden können, um somit zu ermöglichen, dass auf einer nachgelagerten Registry kundenspezifische Parametrierungen an den Images durchgeführt werden können.

Die gleiche Anforderung gilt auch für eine Deployment-Konfiguration, welche gegebenenfalls mehrere signierte Images referenziert und gleichzeitig durch die Betreiber einzelner Registries in bestimmten Abschnitten modifiziert und erweitert werden soll, damit beispielsweise innerhalb einer zentralen Registry, insbesondere eines Industrial Edge Managements, unternehmensspezifische Sicherheitsvorgaben durch Zuweisung bestimmter Deployment-Informationen wie Tags oder Labels zur Bereitstellung von Meta-Informationen oder der Zuweisung oder dem Entzug bestimmter Privilegien zu ermöglichen.

Zusammengefasst stellt die Erfindung somit eine Lösung bereit, welche es einem Entwickler einer Deployment-Konfiguration oder eines Container-Images ermöglicht, die Integrität und Authentizität seiner App über mehrere nachgelagerte Registries hinweg zu sichern und gleichzeitig innerhalb der nachgelagerten Registries gewisse, vom Entwickler freigegebene Änderungen zu ermöglichen, die auch auf der Laufzeitumgebung dann validiert werden können. Somit wird eine Möglichkeit zu einer verbesserten Integritäts- und Authentizitätsprüfung über die Verarbei-tungskette hinweg für die Container-Artefakte bereitgestellt.

In einer Weiterbildung der Erfindung schützt die mindestens eine erste kryptographische Signatur den mindestens einen ersten Parameter gegen eine Modifikation. Die Modifikation ist auch als eine Veränderung bezeichenbar. Der mindestens eine erste Parameter ist somit in einer nachgelagerten Registry oder von einem Nutzer und/oder Kunden nicht mehr veränderbar. Der mindestens eine erste Parameter wird somit vom Hersteller festgelegt und unterliegt dessen Kontrolle.

In einer weiteren Weiterbildung der Erfindung weist der mindestens eine zweite Parameter keine kryptographische Signatur auf.

In einer weiteren Weiterbildung der Erfindung ist der mindestens eine zweite Parameter modifizierbar. Modifizierbar ist auch hier als veränderbar bezeichenbar. Der mindestens eine zweite Parameter ist somit in einer nachgelagerten Registry oder von einem Nutzer und/oder Kunden veränderbar. Der mindestens eine zweite Parameter wird somit nicht vom Hersteller festgelegt und unterliegt nicht dessen Kontrolle.

In einer weiteren Weiterbildung der Erfindung ist zwischen dem mindestens einem ersten Parameter und dem mindestens einem zweiten Parameter keine Überschneidung vorhanden. Die Überschneidung ist auch als Überlappung bezeichenbar. Der mindestens eine erste Parameter und der mindestens eine zweite Parameter sind somit getrennt.

In einer weiteren Weiterbildung der Erfindung ist der mindestens eine erste Parameter ausgebildet als:
- ein eindeutiges Kennzeichen und/oder
- eine Referenz und/oder
- ein initialer Uniform Ressource Locator und/oder
- ein Container-Image Uniform Ressource Locator und/oder
- ein initiales Container-Image-Tag und/oder
- eine Binary-Large-Object-Information und/oder
- ein Container-Image-Label.

Bei einem Container-Image kann somit beispielsweise definiert werden, dass der initiale Uniform Ressource Locator (URL) bzw. das initiale Image Tag mit hinzugefügt wird und eine Integritätssicherung und Authentizitätssicherung der mitgelieferten Binary-Large-Object- (BLOB)-Informationen erstellt wird, jedoch beispielsweise spezielle Image-Labels vor der Ablage in nachfolgenden Registries durch den zuständigen Integrator geändert werden und diese nicht in die Signaturberechnung miteingeschlossen werden sollen.

Das eindeutige Kennzeichen ist insbesondere als ein Container-Image-Label und/oder als ein Container-Image-Tag ausgebildet.

Die Referenz für die zu signierende Schicht ist insbesondere als eine BLOB-Information ausgebildet.

Der initialer Uniform Resource Locator und/oder der Container-Image Uniform Resource Locator sind Referenzen zur Lokation des Images.

In einer weiteren Weiterbildung der Erfindung spezifiziert die mindestens eine erste kryptographische Signatur den mindestens einen ersten Parameter.

Der Ersteller eines Containerimages signiert in seiner Entwicklerinfrastruktur somit sein Artefakt in seinem Signaturservice und spezifiziert hierbei, welche Bereiche in die Signatur zur Berechnung der Signatur mit hinzugezogen werden sollen.

Somit ist über die mindestens eine erste kryptographische Signatur ableitbar, über was die erste Signatur gebildet wird. Dies kann alternativ direkt in den Metadaten der ersten Signatur angegeben werden.

Somit sind Parameter, welche signiert werden, initial nicht im Artefakt angegeben, stattdessen werden zu signierende Parameter vom Ersteller der ersten Signatur vorgegeben. Weiteren Einschränkungen, insbesondere Bedingungen für weitere Signaturen oder die zweite Signatur sind nach einer initialen Signatur - der ersten Signatur - in den jeweils vorgehenden Signaturen angegeben und/oder in vor dem Signaturvorgang eingebrachten zusätzlichen Metadaten angegeben, die wiederrum signiert sind.

In einer weiteren Weiterbildung der Erfindung weist das Artefakt und/oder die mindestens eine erste kryptographische Signatur auf:
- Metadaten,
wobei die Metadaten den mindestens einen ersten Parameter spezifizieren, und
wobei die Metadaten einen Integritätsschutz und/oder Authentizitätsschutz aufweisen.

Welche Parameter zur Erstellung der ersten Signatur verwendet werden, wird somit in den Metadaten der Signatur definiert, welche ebenfalls integritäts- und authentizitätsgesichert sind.

Sämtliche Signaturen können entweder innerhalb des Artefaktes als Teil der Metadaten mitgeliefert werden oder extern, insbesondere in einer Datenbank, auf einem Webserver, einer Blockchain - oder wie bei bereits existierenden Lösungen innerhalb eines Code-Repositories, abgelegt werden.

In einer weiteren Weiterbildung der Erfindung weist die erste kryptographische Signatur eine Referenz auf den mindestens einen zweiten Parameter auf.

"Welche Parameter bei der Erstellung der zweiten Signatur des mindestens einen zweiten Parameters zur Berechnung einbezogen werden, wird somit zum einen aus der Vorgängersignatur abgeleitet, insbesondere wenn Vorgaben wie eine Verschachtelungstiefe spezifiziert werden, und zum anderen aus einer lokal beim Ersteller der Signatur abgelegten, ggf. Artefaktspezifischen Parameter-Richtlinie.

Der mindestens eine zweite Parameter wird somit direkt oder indirekt durch die mindestens eine erste kryptographische Signatur definiert. Das Artefakt selbst weist die explizite Spezifikation des mindestens einen zweiten Parameters auf.

In einer weiteren Weiterbildung der Erfindung weist der Artefakt außerdem auf:
- mindestens einen Datenbereich, aufweisend den mindestens einen ersten Parameter und/oder
- mindestens einen zweiten Datenbereich, aufweisend den mindestens einen zweiten Parameter.

Wenn der mindestens eine Datenbereich signiert wird, wird nicht nur ein Parameter daraus signiert, sondern der gesamte Datenbereich, d.h. ggf. der ganze Abschnitt bzw. eine Teilmenge des Abschnitts, sofern dieser für die nachfolgenden Schritte veränderbare Bereiche hat, was über und/oder in den Vorgängersignaturen definiert werden kann.

Anders ausgedrückt wird somit der mindestens eine erste Parameter von dem ersten Datenbereich des Artefakts aufgewiesen und/oder mindestens eine zweite Parameter von dem zweiten Datenbereich des Artefakts aufgewiesen.

Aufgrund vorhergegangener Ausführungsformen besteht zwischen dem ersten Datenbereich und dem zweiten Datenbereich keine Überlappung.

In einer weiteren Weiterbildung der Erfindung ist der mindestens eine zweite Signatur ein Signaturtiefenwert zugeordnet, wobei der Signaturtiefenwert eine maximal mögliche Anzahl an für das Artefakt zugelassene Signaturen angibt.

Die maximal mögliche Anzahl ist auch als eine begrenzte Anzahl bezeichenbar. Daraus ergibt sich eine festgelegte Obergrenze an Signaturen und wie oft das Artefakt signierbar ist. Dies wird in den Metadaten spezifiziert.

Gleichzeitig soll auch die Möglichkeit bestehen, dass diverse Daten ab einer gewissen Signaturtiefe nicht mehr verändert werden können, indem dies in den Metadaten der Signatur spezifiziert ist und auch die Möglichkeit besteht, dass vom Ersteller der Signatur bestimmte nachfolgende Image-URLs beschränkt werden.

Alternativ oder zusätzlich ist definierbar, dass nur bestimmte nachfolgende Signaturen an ein Image nachträglich angebracht werden dürfen, insbesondere indem eine Referenz auf die zulässigen nachfolgenden Signaturmetadaten oder die ausstellenden Zertifizierungsbehörden spezifiziert wird sowie indem des Weiteren eine Referenz auf die öffentlichen Schlüssel der ausstellenden Zertifzierungsbehörden hinterlegt wird. Die Referenz könnte auch mehrere mögliche Schlüsselreferenzen enthalten, wovon in den nachfolgenden Schritten eine erfüllt sein muss. Hierbei könnte zusätzlich in jedem weiteren Schritt vorgeschrieben werden, von wem unterschrieben werden muss, wenn die Metadaten so spezifiziert sind, dass diese immer für die jeweiligen Schritte gültig sind. Also in Schritt 2 Signaturen von a, b oder c, Schritt 3 Signaturen von c, d oder e usw.

Sofern Signaturtiefen für die Veränderlichkeit von Parametern definiert werden oder die Reihenfolge erforderlich ist, ist es für die nachfolgenden Signaturdienste erforderlich, dass diese zwar nicht das komplette Artefakt inklusive der durch die initiale Signatur geschützten Daten erneut signieren müssen, sondern lediglich die Checksumme der Vorgängersignatur in die Berechnung der nachfolgenden Signatur mit einberechnen müssen.

In einer weiteren Weiterbildung der Erfindung weist das Artefakt außerdem auf:
- mindestens einen dritten Parameter, wobei der mindestens eine dritte Parameter durch mindestens eine dritte kryptographische Signatur signierbar ist.

Daraus folgt, dass der mindestens eine dritte Parameter keine kryptographische Signatur aufweist und dass der mindestens eine dritte Parameter modifizierbar ist.

In einer weiteren Weiterbildung der Erfindung ist das Artefakt als:
- Eine Container-Deployment-Konfiguration oder
- ein Container-Image
ausgebildet.

Die Erfindung umfasst außerdem Container-Instanz basierend auf einem erfindungsgemäßen Artefakt.

Die Erfindung umfasst außerdem eine Containerlaufzeitumgebung aufweisend mindestens eine erfindungsgemäße Container-Instanz.

Die Erfindung umfasst außerdem ein Verfahren zur Erstellung eines Artefakts für eine Instanziierung und/oder Konfiguration einer Container-Instanz für eine Containerlaufzeitumgebung mit den Schritten:
- ein Prüfen mindestens einer ersten kryptographischen Signatur, welche einen ersten Parameter signiert,
- in Abhängigkeit eines Ergebnisses des Prüfens ein Erstellen mindestens einer zweiten kryptographischen Signatur, welche einen zweiten Parameter signiert.

Im Folgenden sind Vorteile des erfindungsgemäßen Verfahrens zusammengefasst. Das Verfahren erlaubt eine Integritätssicherung und Authentizitätssicherung von Artefakten wie Deployment-Konfigurationen und Container-Images und erlaubt gleichzeitig:
- Die Veränderung einzelner nicht integritäts- und authentizitätsgesicherter Parameter und Metadaten in nachfolgenden Verarbeitungsschritten
- Die Beschränkung auf nachfolgende Repostories.

Sofern ein Ablaufdatum der ersten oder einer späteren Signatur spezifiziert wird, kann das Verfahren auch zeitlich für definierte Repositories beschränkt werden. Das Ablaufdatum kann auch dazu verwendet werden, dass innerhalb der nachgelagerten Repositories aktiv nach neuen Versionen in den vorhergehenden Repositories geschaut wird.

Durch das beschriebene Verfahren kann der Bereitsteller eines Artefakts außerdem genauer einschränken, welche Änderungen in nachfolgenden Verarbeitungsschritten in den Artefakten oder den Metadaten zulässig sind.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm mit den zur Erstellung der Signatur beteiligten Stationen und
- Fig. 2: ein Ablaufdiagramm eines zur Erstellung einer zweiten Signatur erforderlichen Ablaufs.

### DETAILLIERTE BESCHREIBUNG DER ERFINDUNG

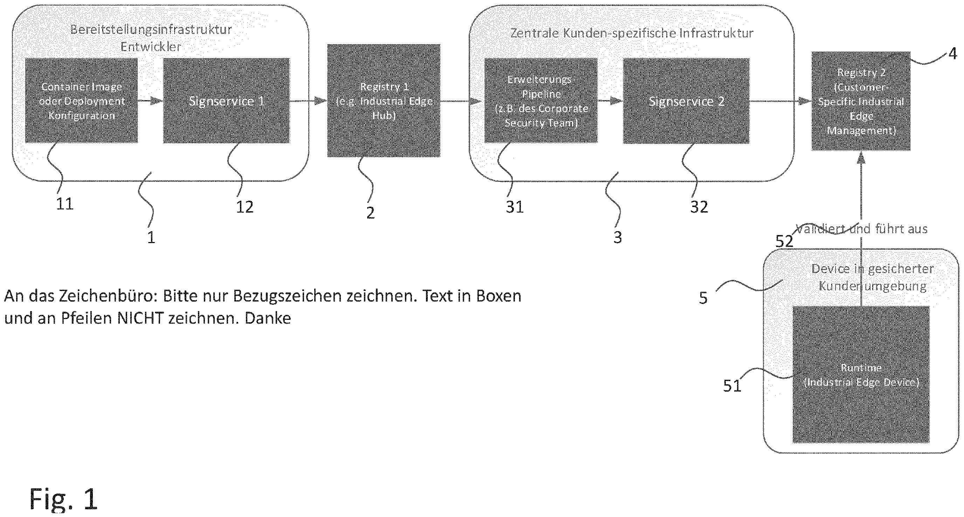

Fig. 1 zeigt einen Ablauf, wie der Ersteller eines Containerimages 11 in seiner Entwicklerinfrastruktur 1 sein Artefakt 11 in seinem Signaturservice 12 signiert und hierbei spezifiziert, welche Bereiche in die Signatur zur Berechnung der Signatur mit hinzugezogen werden sollen.

Eine Bereitstellungsinfrastruktur 1 beim Entwickler, diese enthält einen Artefakt 11, insbesondere ein Container Image 11 oder eine Deployment Konfiguration 11, und einen ersten Signierservice 12, welcher ausgebildet ist die erste Signatur des mindestens einen ersten Parameters zu erstellen.

Der Artefakt 11 wird in einer ersten Registry 2, insbesondere einem Industrial Edge Hub, bereitgestellt.

So gelangt das Artefakt 11 in eine zentrale kundenspezifische Infrastruktur 3. Diese enthält eine Erweiterungs-Pipeline, insbesondere eines Corporate Security Teams 31 des Kunden und einen zweiten Signierservice 32, welcher ausgebildet ist die zweite Signatur des mindestens einen zweiten Parameters zu erstellen.

Der Artefakt 11 wird anschließend in einer zweiten Registry 4, insbesondere einer kundenspezifischen containerisierten industriellen IoT Laufzeitumgebung, bereitgestellt.

In einem Gerät 5 in einer gesicherten Kundenumgebung wird eine Laufzeitumgebung 51 bereitgestellt. Diese validiert und führt 52 das Artefakt 11 schließlich aus.

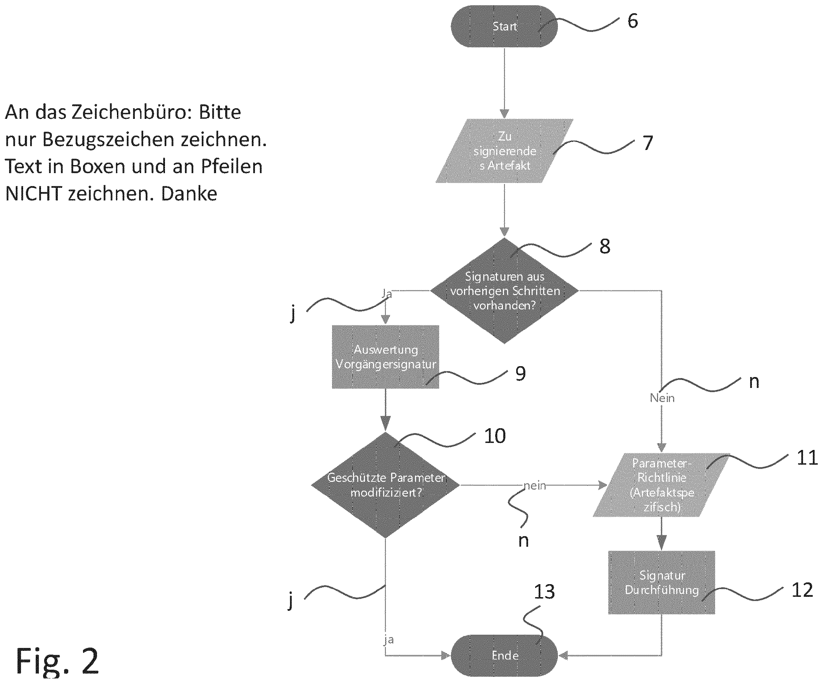

Fig. 2 zeigt den zur Erstellung einer zweiten kryptographischen Signatur 12 erforderlichen Ablauf. Stehen die Parameter der nachfolgenden Signatur im Konflikt zu den Integritäts- und Authentizitätssicherungsvorgaben 11 der Vorgängersignatur 8, 9, wird die Erstellung der nachfolgenden Signatur abgebrochen 13.

Konkret sind in Fig. 2 dargestellt: Nach dem Start 6 wird das zu signierende Artefakt 7 betrachtet. Es wird geprüft, ob Signaturen aus vorherigen Schritten vorhanden sind 8. Falls ja j, erfolgte eine Auswertung der Vorgängersignatur 9, wobei geprüft wird, ob die durch die Vorgängersignatur geschützten Parameter bereits modifiziert wurden. Falls ja j, ist der Ablauf beendet 13. Falls nein n, wird die Parameter-Richtline des Artefakts geprüft 11, anschließend erfolgt das Durchführen der Signatur 12 und das Verfahren ist beendet 12.

Falls keine (nein n) Signaturen aus vorherigen Schritten vorhanden sind 8, erfolgt ebenfalls ein Prüfen der Parameter-Richtline des Artefakts 11, anschließend erfolgt das Durchführen der Signatur 12 und das Verfahren ist beendet 12.

Ein konkretes Ausführungsbeispiel soll hierbei eine zu signierende Docker-Compose-Datei einer App einer containerisierten industriellen IoT Laufzeitumgebung sein, welche vom initialen Ersteller signiert wird und anschließend in eine zentrale Registry, welche insbesondere auf einem zentralen Industrial-Edge Hub bzw. einem eigenständigen AppStore bereitgestellt werden kann, hochgeladen wird. Der Ersteller definiert hierbei, dass z.B. die Docker-Compose-Datei nur in nachgelagerten Registries eines bestimmten Kundens zur Verfügung gestellt werden darf und definiert dies in den integritäts- und authentizitätsgesicherten Metadaten der Signatur. Hierbei sind verschiedene Möglichkeiten der Referenz denkbar.
- Es kann direkt der DNS-Name spezifiziert werden
- Es kann definiert werden, dass die nachfolgende Signatur von einem privaten Schlüssel durchgeführt werden muss, der von einer bestimmten Zertifizierungsstelle ausgestellt wurde

Gleichzeitig kann wie oben beschrieben auch spezifiziert werden, dass bestimmte Parameter lediglich in der ersten nachgelagerten Registry, welche insbesondere auf einem Industrial Edge Management-System bereitgestellt werden kann, verändert oder hinzugefügt werden dürfen. Diese Parameter können entweder direkt oder über die Spezifikation regulärer Ausdrücke innerhalb der Metadaten der ersten Signatur spezifiziert werden. In der nachfolgenden Signaturinstanz wird zunächst überprüft, ob die in der vorhergehenden Signatur definierten Bedingungen erfüllt sind und ob diese gültig ist. Durch die Validierung der ersten Signatur wird sichergestellt, dass keine weitere Instanz zwischen der ersten Signatur und der nun zu erfolgenden Signatur unberechtigte Veränderungen durchgeführt hat.

Sind mehrere Signaturen angebracht, werden diese validiert, indem nacheinander validiert werden. Inkompatibilitäten aufgrund inkompatibler Modifikationen können entstehen, indem entweder ein Entwickler Modifikationen durchführt, welche bereits signierte Bereiche umfassen oder andere Werte z.B. durch nicht-autorisierte Modifikationen durchgeführt werden. Um beide Modifikationen direkt zu erkennen, wird vorgeschlagen, dass diese in der gleichen Reihenfolge validiert werden, wie diese angebracht wurden.

Wird in einem Verarbeitungsschritt (Modifikation + Signaturvorgang) ein Parameter verändert, der in nachfolgenden Verarbeitungsschritten nicht mehr verändert werden soll, wird der neu eingeführte Parameter in die Signatur miteingeschlossen.

Um zu verhindern, dass der Ersteller einer Signatur die initiale Signatur entfernen kann und somit die ursprünglichen Validierungsvorgaben deaktiviert, wird angenommen, dass ein Endgerät (Container-Laufzeitumgebung oder ein Industrial Edge Device), welches die Validierung durchführt, über einen definierten Truststore verfügt, der definiert, welche möglichen initialen Einstiegssignaturen ein signiertes Artefakt (eine Deployment-Konfiguration oder ein Image) aufweisen muss.

Hierzu müssen entweder die öffentlichen Signaturschlüssel der ersten Registry (z.B. einem Appstore oder dem Industrial Edge Hub) direkt hinterlegt werden oder von Zertifizierungsstellen autorisiert werden und der Schlüssel der Zertifizierungsstelle hinterlegt werden, damit eine Validierung möglich ist.

Schlägt die Validierung der angebrachten Signaturen auf dem Endgerät fehl, wird die Ausführung der Deployment-Konfiguration oder des Container-Images verweigert und eine Fehlermeldung ausgegeben.

Da vorherige Signatur-Instanzen nicht nur Änderungen an den Artefakten selbst (wie z.B. die Erstellung zusätzlicher Prozessprivilegien) in den Metadaten die nachfolgenden Signaturinstanzen beschränken können, ist es auch möglich, dass mit dem beschriebenen Verfahren auch sichergestellt werden kann, dass nur lizensierte nachgelagerte Registry-Umgebungen eine dedizierte Version erhalten und verteilen dürfen. Sofern angenommen wird, dass der Laufzeitumgebung vertraut wird, kann hierdurch auch die Ausführungsberechtigung durch Zuweisung entsprechender Metadaten in vorherigen Signaturvorgängen zeitlich begrenzt werden, indem beispielsweise ein Ablaufdatum in den Metadaten spezifiziert wird und die Instanz nicht mehr mit der bereitgestellten Version neu gestartet werden kann.

Annahme für das beschriebene Verfahren ist hierbei, dass die Validierungskomponente auf der Container-Laufzeitumgebung die mit der Signatur spezifizierten Metadaten ebenfalls validiert.

Durch die Bereitstellung eines Ablaufdatums und dessen Integritäts- und Authentizitätssicherung kann auch definiert werden, dass ein Repository spätestens nach einem definierten Ablaufdatum nach einer neueren Version im darüberliegenden Repository schaut und die Verteilung auf nachfolgende Repositories oder Laufzeitumgebungen einschränkt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Artefakt für eine Instanziierung und/oder Konfiguration einer Container-Instanz für eine Containerlaufzeitumgebung, aufweisend:
- mindestens einen ersten Parameter, wobei der mindestens eine erste Parameter eine erste kryptographische Signatur aufweist,
- mindestens einen zweiten Parameter, und
- eine explizite Spezifikation des mindestens einen zweiten Parameters hinsichtlich einer Signierbarkeit durch eine zweite kryptographische Signatur.

2. Artefakt nach Anspruch 1,
wobei die mindestens eine erste kryptographische Signatur den mindestens einen ersten Parameter gegen eine Modifikation schützt.

3. Artefakt nach einem der vorhergehenden Ansprüche,
wobei der mindestens eine zweite Parameter keine kryptographische Signatur aufweist und/oder
wobei der mindestens eine zweite Parameter modifizierbar ist.

4. Artefakt nach einem der vorhergehenden Ansprüche,
wobei zwischen dem mindestens einem ersten Parameter und dem mindestens einem zweiten Parameter keine Überschneidung vorhanden ist.

5. Artefakt nach einem der vorhergehenden Ansprüche,
wobei der mindestens eine erste Parameter ausgebildet ist als:
- ein eindeutiges Kennzeichen und/oder
- eine Referenz und/oder
- ein initialer Uniform Ressource Locator und/oder
- ein Container-Image Uniform Ressource Locator und/oder
- ein initiales Container-Image-Tag und/oder
- eine Binary-Large-Object-Information und/oder
- ein Container-Image-Label.

6. Artefakt nach einem der vorhergehenden Ansprüche,
wobei die mindestens eine erste kryptographische Signatur den mindestens einen ersten Parameter spezifiziert.

7. Artefakt nach einem der vorhergehenden Ansprüche,
wobei das Artefakt und/oder die mindestens eine erste kryptographische Signatur aufweist:
- Metadaten,
wobei die Metadaten den mindestens einen ersten Parameter spezifizieren, und
wobei die Metadaten einen Integritäts- und Authentizitätsschutz aufweisen.

8. Artefakt nach einem der vorhergehenden Ansprüche,
wobei die erste kryptographische Signatur eine Referenz auf den mindestens einen zweiten Parameter aufweist.

9. Artefakt nach einem der vorhergehenden Ansprüche, außerdem aufweisend:
- mindestens einen Datenbereich, aufweisend den mindestens einen ersten Parameter und/oder
- mindestens einen zweiten Datenbereich, aufweisend den mindestens einen zweiten Parameter.

10. Artefakt nach einem der vorhergehenden Ansprüche,
wobei der mindestens eine zweite Signatur ein Signaturtiefenwert zugeordnet ist, wobei der Signaturtiefenwert eine maximal mögliche Anzahl an für das Artefakt zugelassene Signaturen angibt.

11. Artefakt nach einem der vorhergehenden Ansprüche, außerdem aufweisend:
- mindestens einen dritten Parameter, wobei der mindestens eine dritte Parameter durch mindestens eine dritte kryptographische Signatur signierbar ist.

12. Artefakt nach einem der vorhergehenden Ansprüche,
das Artefakt als:
- Eine Container-Deployment-Konfiguration oder
- ein Container-Image
ausgebildet ist.

13. Container-Instanz basierend auf einem Artefakt nach einem der vorherigen Ansprüche.

14. Containerlaufzeitumgebung aufweisend mindestens eine Container-Instanz nach Anspruch 13.

15. Verfahren zur Erstellung eines Artefakts für eine Instanziierung und/oder Konfiguration einer Container-Instanz für eine Containerlaufzeitumgebung
mit den Schritten:
- ein Prüfen mindestens einer ersten kryptographischen Signatur, welche einen ersten Parameter signiert,
- in Abhängigkeit eines Ergebnisses des Prüfens ein Erstellen mindestens einer zweiten kryptographischen Signatur, welche einen zweiten Parameter signiert.
